# EUROPÄISCHE PATENTSCHRIFT

(11) **EP 3 036 531 B1**
(45) Veröffentlichungstag und Bekanntmachung des Hinweises auf die Patenterteilung: **07.06.2023**
(21) Anmeldenummer: 14780402.5
(22) Anmeldetag: 18.08.2014
(51) Int. Cl.: G01N 21/84

(54) **VORRICHTUNG ZUR DIGITALEN ABLESUNG FÜR SCHNELLTESTS**
DEVICE FOR DIGITALLY READING RAPID TESTS
DISPOSITIF DE LECTURE NUMÉRIQUE POUR DES TESTS DE DIAGNOSTIC RAPIDE

(30) Priorität: 20.08.2013 DE 102013014059
(43) Veröffentlichungstag der Anmeldung: 29.06.2016
(73) Patentinhaber: Chembio Diagnostics GmbH, 12489 Berlin (DE)
(72) Erfinder: HEIN, Wilko, 10409 Berlin (DE); BARBOUTIS, Grigorios, 12524 Berlin (DE)
(74) Vertreter: PATERIS Patentanwälte PartmbB
(86) Internationale Anmeldenummer: PCT/DE2014/000433
(87) Internationale Veröffentlichungsnummer: WO 2015/024553

(56) Entgegenhaltungen:
- EP-A1- 1 582 598
- EP-A1- 1 965 199
- EP-A1- 2 385 369
- US-A- 5 622 871
- US-A1- 2004 241 752
- US-A1- 2005 095 697
- US-A1- 2010 267 049
- US-A1- 2010 315 644

## Beschreibung

### Einleitung

Die Erfindung betrifft ein Gerät zur digitalen Ablesung für Schnelltests, insbesondere zur fotometrischen Bewertung eines Teststreifens, eines sogenannten Lateral Flow Assay (LFA). Solche LFA's finden als Schnelltests zunehmende Anwendung, die Erfindung ist also in der Diagnostik und in der Bioanalytik einsetzbar.

### Stand der Technik

Es gibt ein wachsendes Bedürfnis nach objektiven und entscheidungssicheren Auswertehilfen insbesondere Messvorrichtungen für den Selbstanwender von Schnelltests mit intuitiver Benutzung/Bedienung, die einfach aufgebaut sein müssen und den Testverpackungen (z. B. in Apotheken) beigelegt werden können. Sie sollten möglicherweise auch zum Einmalverbrauch (sog. Disposables) geeignet sein. Bei Geräten für den professionellen Einsatz haben kamerabasierte Geräte ihre Überlegenheit bezüglich Genauigkeit, Reproduzierbarkeit und mechanischer Robustheit bewiesen. Der hohe technische Aufwand und die Kosten erschweren jedoch bisher den Einsatz im Endverbraucherbereich. Bei professionellen Geräten werden außerdem chargen- und testspezifische Kalibrierdaten für die Messungen benötigt, was bei kostengünstigen Systemen bisher schwierig erscheint.

Immunoassays gehören in der Bioanalytik zu den am weitesten verbreiteten Methoden, weil sie mit geringem Aufwand, Kosten- und Zeitbedarf schnelle diagnostische Vorhersagen, Verlaufskontrollen von Krankheiten, den Nachweis von Giftstoffen oder die Überwachung von Arzneistoffen im Körper ermöglichen. Die LFA's (Teststreifen) basieren auf dem Prinzip, dass eine kleine Menge der zu untersuchenden Probenflüssigkeit an der Probenauftragsstelle mit markierten Antikörpern in Kontakt gebracht wird. Wenn in der Probenflüssigkeit eine ausreichende Menge des Analyten vorhanden ist, kann dieser mit dem markierten Antikörper reagieren und einen Immunkomplex bilden. Auf einer Membran sind an definierten Stellen (Testlinie) weitere immunologische Komponenten linienförmig fixiert, die aus der Probe entweder die freien oder komplexierten markierten Antikörper festhalten und dadurch an diesen Linien ein photometrisch messbares Signal (Farbe der Goldpartikel) anreichern. Während für manche Analyte eine qualitative Aussage und eine visuelle (subjektive) Beurteilung der Testbande ohne Messgerät für die Interpretation ausreichen (Schwangerschaftstest), sind für andere Analyte objektive und reproduzierbare oder gegebenenfalls quantitative Signalauswertungen mit einem entsprechenden Messgerät notwendig. Der Trend geht dahin, auch bei qualitativen Tests Geräte zur Objektivierung der Aussage zu verwenden.

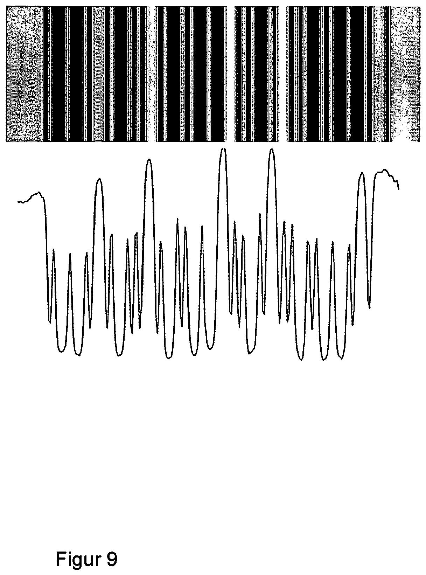

Solche Teststreifen werden in Testkassetten (Fig. 9) eingebaut. In eine dafür vorgesehene Öffnung der Testkassette wird eine Probeflüssigkeit, zum Beispiel Blut, Urin oder Speichel im Falle eines diagnostischen Schnelltests aufgebracht, auf dem Streifen kommt es zu einer Antikörperreaktion, in der Folge kommt es in zwei Streifen im Beobachtungsfenster der Testkassette zu einer Verfärbung. Die Verfärbung der Testlinie gibt Auskunft über die Konzentration des Analyten, die Kontrolllinie C zeigt die Gültigkeit des Tests an. Solche Schnelltests finden zunehmend Anwendung in der humanen Diagnostik, bei der Analyse von Lebensmitteln (Mykotoxine), in der Drogenanalytik und in der Allergiediagnostik.

Ursprünglich wurden diese Schnelltests für einfache Ja/Nein-Aussagen entwickelt, zum Beispiel für einen Schwangerschaftstest. Mit zunehmendem technischen Fortschritt gelang es aber immer mehr, diese Tests quantifizierbar zu gestalten, d. h. die Stärke des Farbumschlages korreliert mit der Konzentration des Analyten und ermöglicht damit Aussagen über die Schwere eines Ereignisses. In der Anfangszeit legten die Hersteller der Tests für die Verbraucher in der Test-Verpackung Farbtafeln als Auswertehilfen bei. Die Testnutzer sollten anhand dieser farbigen Piktogramme das Ergebnis bezüglich der Farbintensität bewerten und damit das Ergebnis feststellen. Für den professionellen Einsatz wurden Geräte zur quantitativen Bewertung dieser Tests entwickelt, sogenannte Reader. In solchen Readern erfolgt die Bewertung anhand von chargen- und testspezifischen Kalibrierkurven, die im Gerät hinterlegt sind und mit denen der Messwert elektronisch verglichen wird. Aufgrund der komplexen technischen Problematik und der erforderlichen Genauigkeit sind solche Geräte aber für den Endverbraucher zu aufwändig.

Der Endanwender, der in der Apotheke einen Selbsttest kauft, muss in der Regel weiterhin auf Farbtafeln zurückgreifen, die den Verkaufsverpackungen beiliegen. Der Endanwender fühlt sich bei der Selbstauswertung aber oft unsicher, er wünscht sich eine eindeutige ablesbare Aussage, die keine Entscheidungsunsicherheit enthält. Auf dem Markt existieren nur für ausgewählte Tests einfache, für die Endanwender konzipierte Geräte zur Auswertung von Tests, zum Beispiel für Schwangerschaftstests oder für ausgewählte Tests in den USA.

Allen Auswertegeräten ist funktionell gemeinsam, dass die Teststreifen beleuchtet werden und das reflektierte Licht fotometrisch in einem definierten Pixelraster bewertet wird. Dazu werden linienförmige (eindimensionale) oder flächenhafte (zweidimensionale) Scans in dem Testfeld durchgeführt und von jedem Pixel (Bildpunkt) die Lichtintensität gemessen und digital gespeichert. Aus der Höhe des Reflexionssignals der Testlinie wird über den rechnerischen Vergleich mit einer im Speicher hinterlegten Kalibrierungskurve die Konzentration des Analyten in der Probe ermittelt und zur Anzeige gebracht.

Professionelle Geräte im Laboreinsatz, die nach dem Stand der Technik bekannt sind, arbeiten entweder nach dem Scanner- oder nach dem Kameraprinzip. Beim Scannerprinzip befinden sich Sender- und Empfangseinheiten in einem sehr engen Raster (als Chip) mit geringem Abstand zueinander. Bei der Relativbewegung zwischen dem abzubildenden Objekt und der Sende- und Empfangseinheit, einem optomechanischen Vorgang, wird das Objekt gemäß dem definierten Raster abgetastet und als Bild elektronisch aufgenommen. Scanner sind häufig mechanisch anfällig, aber in großen Stückzahlen günstig verfügbar. Beim Kameraprinzip wird das Objekt mittels einer Optik auf einen Photoempfänger mit einer Fülle von Empfangspixeln z. B. einer CCD-Matrix oder Zeile elektronisch ausgelesen, übertragen, und ausgewertet. Vorteile des Kameraprinzips sind seine mechanische Robustheit und die schnelle Bildaufnahme. Die Aufnahme von Bildern in definierter Frequenz ermöglicht Filmaufnahmen.

Gute Kamerasysteme dagegen sind selten kostengünstig verfügbar. Bei preiswerten kamerabasierten Auswertesystemen kauft der Anwender einfache und kostengünstige Webcams zu und verarbeitet die Bilder mit herkömmlichen Betriebssystemen. Diese Systeme sind aufgrund des unzuverlässigen Weiß Abgleichs und der Anfälligkeit der komplexen Software (z. B. bei der Verwendung von Windows-Bildverarbeitungssoftware) nicht zuverlässig.

In der europäischen Patentanmeldung EP2356433 A2 "Gerät und Verfahren zur Auswertung und Bewertung eines Teststreifens" wird eine Lösung vorgeschlagen, bei der das Bild von der CCD-Matrix direkt von einem Mikrokontroller ausgelesen wird. Im Sichtbereich der Kamera befinden sich erfindungsgemäß farbstabile Kalibriernormale, mit denen bei jedem Gerätestart das Gerät neu kalibriert wird. Die test- und chargenspezifischen Daten sind auf einer dazugehörigen SD-Karte gespeichert, ein Barcodescanner prüft die Testidentität auf der Rückseite der Testkassette und schließt damit Vertauschungen von Tests aus.

Nachteilig bei diesen Geräten ist der damit verbundene hohe technische Aufwand. Die genaue Abbildung erfordert eine hochwertige Optik, eine aufwändige CCD-Matrix und einen 32-Bit-Prozessor mit zusätzlichen Speichermöglichkeiten.

Es gibt folgende technische Lösungsansätze für Endkunden-Selbsttests, die das gleiche Ziel haben, mit möglichst wenigen optischen Komponenten eine Bewertung vorzunehmen.

In der Druckschrift US 2010/315644 A1 wird ein Handscanner beschrieben, der über einen Test bewegt wird.

In der Druckschrift US 2005/095697 A1 wird ein Lesegerät beschrieben, bei dem ein Sensor in einer optischen Maus integriert ist.

Weitere relevante Druckschriften auf dem Gebiet der Technik sind die US 2010/267049 A1, US 2004/241752 A1, EP 1 582 598 A1, US 5 622 871 A und EP 1 965 199 A1.

Eine Gruppe dieser Lösungsansätze schlägt vor, möglichst nur einzelne Fotodioden zur Auswertung zu verwenden. So werden zum Beispiel beim Clearblue Schwangerschaftstest (US-Patent 5,622,871) jeweils Kontrolllinie und Testlinie mit einzelnen PIN-Fotodioden zur Auswertung der Testfelder erkannt. Diese Fotodioden haben bei der Auswertung keinen relativen Messbezug, liefern aber eine einfache ja/nein-Aussage. Die vertreibende Firma wirbt damit, dass sich 1/4 der Frauen bei der Auswertung ohne Messvorrichtung irren, und dies mit der elektronischen Anzeige ausgeschlossen werden kann.

Aus dem EP 2385369A1 ist ein Assay Reader bekannt, der unter dem Namen "Alverix" vertrieben wird, der nur mit einer Lichtquelle und einer Fotodiode ausgestattet ist. Das Gerät weist einen Schacht auf, in den die Testkassette zur Messung eingeschoben wird. Mit diesem Gerät wird ein linienförmiger Scan rechtwinklig durch Test- und Kontrolllinie durch die Relativbewegung während des Einführens des Tests in den Messschacht erzeugt. Dazu wird mit nur einem Beleuchtungselement (LED) und einer Fotodiode entlang der Diode ein eindimensionaler Scan durch das Sichtfenster der Kassette erzeugt. Nachteilig bei dieser Lösung ist es, dass keine Ortsinformationen zugeordnet werden können, anhand des Scans kann nur ein relatives Bild ausgewertet werden, d. h. die Maxima können zueinander oder zum Grundwert ins Verhältnis gesetzt werden. Ein anderer wesentlicher Nachteil ist, dass die Genauigkeit des Scans und der Werte von die Einschubgeschwindigkeit des Bedieners abhängig ist: Wird der Test mit hoher Geschwindigkeit eingeschoben, muss die Fotodiode sehr schnell messen, was zu Fehlmessungen führen kann.

Alle Immunoassay-Tests auf dem Markt haben unterschiedliche Testverläufe. Das bedeutet, das Maß des Farbumschlages in Abhängigkeit von der Analytkonzentration ist zwar reproduzierbar kann aber verschiedenen mathematischen Funktionen folgen. Diese sind in der Regel der Rodbard Funktion sehr ähnlich (je mehr Analyt, desto stärker die Verfärbung bzw. der Farbumschlag). Bei sogenannten kompetitiven Assays verläuft die Verfärbung invers (Verfärbung nimmt bei hoher Konzentration ab). Weiterhin können sich bei unterschiedlichen Chargen die Paramater der Funktionen ändern. Das bedeutet, dass Messgeräte für die Quantifizierung von unterschiedlichen Immunoassays in der Lage sein müssen, die Tests zu identifizieren und/oder testspezifische Kalibrierdaten zugeführt werden müssen. Bei den auf dem Markt befindlichen Geräten wird dies entweder mit einer manuellen Eingabe oder über einen Scanner bzw. Barcode auf der Rückseite realisiert.

### Ziel der Erfindung

Das Ziel der Erfindung ist es, eine technische Lösung und eine Anordnung für ein Mess- und Anzeigegerät zu finden, das:
- als elektro-optisch unterstützte Messvorrichtung für LFA-Schnelltests für Endanwender dient,
- die Vorteile eines Kamerasystems nutzt und trotzdem kostengünstig herstellbar ist,
- nur aus wenigen Komponenten besteht,
- so kostengünstig herstellbar ist, dass es dem Testnutzer zum Gebrauch in der Verpackung beigelegt werden kann,
- trotzdem weitestgehend die Funktionalität eines mobilen Auswertegerätes hat,
- für einen Test in einem vorher bestimmbaren Zeitraum nutzbar sein soll,
- durch Hinzuführen von einer oder mehreren spezifischen Testinformationen beliebige Tests auswerten kann,
- für verschiedene Anwendungen d. h. unterschiedliche Tests mit unterschiedlichen Kurvenverläufen konfigurierbar sein soll und damit nicht nur für qualitative Tests, sondern auch für die Quantifizierung von Immunoassays geeignet sein soll.

Die Vorteile eines kamerabasierten Systems nutzen bedeutet, einmalige Bilder der Teststreifen zu erzeugen und das möglichst mehrfach hintereinander. Es muss eine Lichtquelle benutzt werden, die das abzubildende Objekt ausreichend ausleuchtet. Es wird eine Abbildung auf einem Empfänger mit mehreren Empfangselementen (Pixeln) realisiert. Die Auswertefunktion der Bilder sollte mit einer geräteeigenen Software (embedded System) in einem Gerät vereint werden oder dem Gerät unmittelbar vor der Messung zugeführt werden. Die Werte sollten speicherbar und auf Wunsch mit einem Adapter auslesbar sein. Die Messvorrichtung sollte so einfach aufgebaut sein, dass sie gegebenenfalls zum einmaligen Gebrauch einer Verpackungseinheit beigelegt werden kann. Die Messvorrichtung sollte beliebig viele Linien in dem Testfeld und auch eng beieinander liegende Testfelder auswerten können.

### Wesen der Erfindung

Die Erfindung wird gemäß dem Hauptanspruch realisiert, die Unteransprüche sind Vorzugsvarianten.

Kern der Erfindung ist die Realisierung einer einfachen Kamera als autonom arbeitende Baugruppe, die intuitiv vom Endverbraucher über das Testfeld positioniert wird, ein objektives Ergebnis liefert und dabei die Vorteile eines Kamerasystems nutzt. Es wurde gefunden, dass mit dem einfachen Mess- und Anzeigegerät bei üblichen Schnelltests eine Messgenauigkeit und Auflösung erreicht werden kann, die an die professioneller Reader heranreicht.

Die erfindungsgemäße Vorrichtung zur digitalen Messung für Schnelltests besteht aus einem Gehäusegrundkörper, einem Aufsatzteil, einer Lichtquelle, optischen Komponenten für die Abbildung (Lochblende), einer CCD-Zeile als Empfangselement, einer elektronische Schaltung (Leiterplatte), einer Anzeigekomponente, einer elektrische Schnittstelle zur Datenübertragung, einem kabel-/berührungslosen Datenübertragungssystem, einer Aufnahmeeinrichtung für den Schnelltest, einer Stromversorgung und ein Bedienelement (Schalter).

Die erfindungsgemäße Vorrichtung ist dadurch gekennzeichnet, dass
- als abbildendendes Element eine Loch- bzw. Schlitzblende dient und auf zusätzliche optische Komponenten (Linsen) verzichtet wird,
- die Schlitzblende parallel zu den zu detektierenden Linien angeordnet ist,
- die Schlitzblende für die Abbildung im Gehäusegrundkörper integriert ist und auf eine zusätzliche Positionierung der optischen Komponenten verzichtet werden kann,
- die testspezifischen Daten über eine kabel-/berührungslose automatisiche Identifizierung mit Hilfe elektromagnetischer Wellen (sogenannte RFID: RadioFrequenz identification) zwischen Test u Auswertegerät übertragen werden. Dazu befindet sich auf der Rückseite des Tests oder auf der Testverpackung ein Transponder, auf dem die testspezifischen Daten hinterlegt sind, die vom Ablesegerät drahtlos abgefragt werden,
- die Testergebnisse auf dem im Test befindlichen Transponder abgelegt werden können.

Ein Vorteil besteht darin, dass die Wellenlänge der Lichtquelle an den Test angepasst werden kann.

Die Aufnahmemöglichkeit (Batteriefach) für die Stromversorgung ist im Gehäusegrundkörper 6 angeordnet.

Die innere Oberfläche wird so gestaltet, dass sie optisch inaktiv ist. Das wird dadurch erreicht, dass die innere Oberfläche mattiert ist. Eine andere Möglichkeit, die Oberfläche optisch inaktiv zu gestalten, besteht darin, die seitliche Beleuchtung in einem solchen Winkel durchzuführen, dass es keine störenden Reflexionen gibt. Die erfindungsgemäße elektro-optische Messvorrichtung arbeitet nach dem Kameraprinzip, bei der eine kostengünstige CCD-Zeile verwendet wird, die zur Auswertung einen Mikrokontroller sowie zur Beleuchtung eine LED enthält, bei der alle Elemente in einer Einheit aus nur 2 Gehäusekörpern angeordnet sind und die gleichzeitig über eine eigenständige Steuerung des Messablaufes verfügt.

Ein wesentliches Merkmal der Erfindung ist die Verwendung einer Lochblende mit schlitzförmiger Apertur zur Abbildung eines Streifenmusters auf dem Zeilensensor, einer sogenannten anamorphen Optik.

Eine Lochblende wäre zur Abbildung ausreichend. Jedoch durch den Einsatz einer Schlitzblende, deren Schlitz parallel zu den Teststreifen verläuft, wird die Helligkeit des Bildes auf dem Sensor um den Faktor 5 erhöht. Durch die Schlitzblende wird eine größere Breite der Testlinien auf einen Pixel der CCD-Zeile abgebildet, die Helligkeit und die Messdynamik und die Messgenauigkeit werden erhöht. Durch den Einsatz der Schlitzblende wird ein Integrationseffekt über die Streifenbreite erzielt und die Abbildung wird unempfindlicher gegen Inhomogenitäten in den Testlinien.

Trotz des Einsatzes einer CCD-Zeile kann durch die Schlitzblende der Informationsgehalt vom gesamten Flächeninhalt eines Teststreifens ausgelesen bzw. ausgewertet werden.

Weiterhin sind in dieser Einheit eine Batterie, ein Auslöseknopf, und eine Anzeige montiert. Die gesamte Messvorrichtung arbeitet autonom. Die Vorrichtung besitzt an ihrer Unterseite eine Öffnung, die zum Messvorgang intuitiv auf einem Messfenster aufgesetzt wird. Testkassette und Messvorrichtung besitzen jeweils korrespondierende geometrische Strukturen, die es jedem Bediener intuitiv ermöglichen, den Test an die richtige Messposition zu setzen. Die Messung wird durch einen Tastschalter ausgelöst. Der Messwert wird nach einigen Sekunden zur Anzeige gebracht.

Das Gehäuse besteht aus zwei Teilen. In einem Gehäuseteil ist in einer optischen Achse senkrecht zum Messobjekt eine Blende angeordnet. Die Abstände zwischen Linsenhauptachse bzw. Blende zum Messobjekt bzw. zur CCD sind so dimensioniert, dass eine optimale Abbildung des Messfensters auf die CCD-Linie gewährleistet ist. In diesem Grundkörper befindet sich eine Kammer zur Aufnahme der Batterie. Weiterhin weist der Körper eine Öffnung zur Aufnahme einer Beleuchtung auf, die gewährleistet, dass die Probe seitlich beleuchtet wird. Die seitliche Beleuchtung erfolgt in einem solchen Winkel, dass Reflexionen von der Oberfläche der Messprobe (zum Beispiel im Falle der Verwendung von Tests, die mit einer durchsichtigen Folie oder einem Fenster geschützt sind), nicht auf den Empfänger geraten.

Der Grundkörper weist eine Anschlagfläche auf, auf der ein Verdrahtungsträger, bevorzugt eine Leiterplatte, montiert ist. Die Leiterplatte weist als Kernbauelemente den CCD-Sensor, einen Mikrokontroller, die Sende/Empfangseinheit für die kabel-/berührungslose Datenübertragung und ggf. eine Steckerbuchse auf.

Alle Gehäusekörper sind so konstruiert, dass sie durch eine Spritzgusstechnologie in großen Stückzahlen herstellbar sind.

### Vorteile der erfindungsgemäßen Vorrichtung

Die Vorteile resultieren aus der Umsetzung der Kameralösung mit bevorzugten Abmessungen von ca. 40 × 40 × 40 mm<3> und geringer Masse von ca. 80 g. Mit einer Kamera können innerhalb eines Bruchteils einer Sekunde Bilder aufgenommen werden. Der Mikrokontroller liest diese Pixelinformationen aus der CCD-Zeile (oder Matrix) innerhalb von kurzer Zeit aus. Durch die Aufnahme von mehreren Bildern in einem kurzen Zeitabstand können höhere Messgenauigkeiten als beim einmaligen Scannen nach opto-mechanischem Prinzip erreicht werden. Weiterhin lassen sich Bildsequenzen während der Testentwicklung aufnehmen, mit denen bei bekannten Verfärbungsverläufen von Tests, Vorhersagen über ein zu erwartendes Endergebnis getroffen werden können. Dauert beispielsweise ein vollständiger Test bis zum "Ausentwickeln" 15 Minuten, lassen sich durch die Auswertung von Bildsequenzen bereits nach wenigen Minuten Aussagen über ein zu erwartendes Endergebnis treffen. Die Nutzung der Testdynamik ist besonders dann erfolgversprechend, wenn zum Beispiel in einem System nur eine Zeile und damit wenig Werte zu verarbeiten sind.

Durch die Verwendung von 2 Standard-LED's wird eine relativ homogene Ausleuchtung des Testfeldes erzielt.

Obwohl keine zusätzlichen optisch abbildenden Bauelemente verwendet werden müssen und nur eine Lochblende mit schlitzförmiger Apertur, die beim Herstellungsprozess in den Gehäusegrundkörper eingeprägt ist, zum Einsatz kommt, wird eine hochwertige optische Abbildung erreicht. Durch die schlitzförmige Apertur der Lochblende parallel zur Testlinie wird ein Integrationseffekt erzielt und die Abbildung unempfindlicher gegenüber Inhomogenitäten innerhalb der Testlinie. Während eine klassische Lochblende ein in alle Richtungen der Bildebene gleichartiges Abbildungsverhalten liefern würde, wird die Auflösung parallel zum Teststreifen durch die schlitzförmige Ausführung herabgesetzt, um den gewünschten Integrationseffekt zu erzeugen. Ein weiterer Vorteil der Schlitzblende ist die Erhöhung des den Sensor erreichenden Nutzsignals, wodurch gleichzeitig das Signal-Rauschverhältnis verbessert wird.

Für kostengünstige Messvorrichtungen für den Endverbraucher kann bei bestimmten Tests auf die chargenabhängige Kalibrierung verzichtet werden. Im Speicher der Messvorrichtung werden vom Testhersteller absolute Werte als Vergleichswerte und Entscheidungsschwellen hinterlegt. Die erfindungsgemäße Geräteausführung bietet zusätzlich Möglichkeiten zur Identifizierung und Konfigurierung von verschiedenen Tests beziehungsweise zur automatischen und berührungslosen Übertragung chargenspezifischer Testdaten mit Hilfe elektromagnetischer Wellen (vorzugsweise mittels RFID). Dazu kann auf dem Test bzw. auf der Verpackungseinheit ein Transponder aufgebracht werden, aus dem die testspezifischen Daten von der geräteinternen Elektronik automatisch über elektromagnetische Wellen ins Gerät eingelesen werden.

Ist der Test mit einem Transponder bestückt, besteht die Möglichkeit, die ermittelten Testergebnisse direkt durch die Messvorrichtung auf dem Test abzulegen.

Da das System durch einen Mikrokontroller gesteuert wird, besteht die Möglichkeit, die Messwerte zu speichern. Durch ein einfaches Schnittstellenkabel können die Werte ausgelesen und auf einen externen Computer übertragen werden.

**Die Erfindung wird im Folgenden an Hand mehrerer Figuren näher erläutert.**

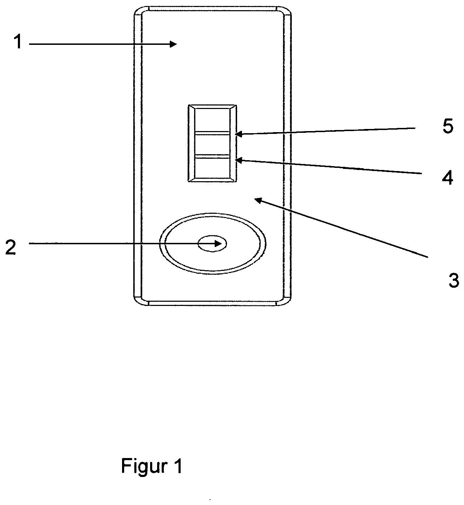

In der **Figur 1** ist eine Testkassette (1) dargestellt. In der Testkassette befindet sich ein Teststreifen aus einem saugfähigen Vlies. Die Kassette weist mindestens zwei Öffnungen auf. In die Öffnung (2) wird eine Testflüssigkeit (zum Beispiel Blut oder Speichel) aufgetragen. Diese Flüssigkeit breitet sich auf dem Teststreifen aus und fließt in Richtung der Sichtöffnung (3). Auf dem Streifen sind senkrecht zur Fließrichtung Reagenzien in streifenförmigen Linien aufgebracht, in denen es zu einer Farbumschlagreaktion kommt. Eine erste Linie (4) "Capture line" zeigt die Konzentration des zu detektierenden Analyten an, die zweite Linie, die Kontrolllinie (5) zeigt die Gültigkeit des Tests.

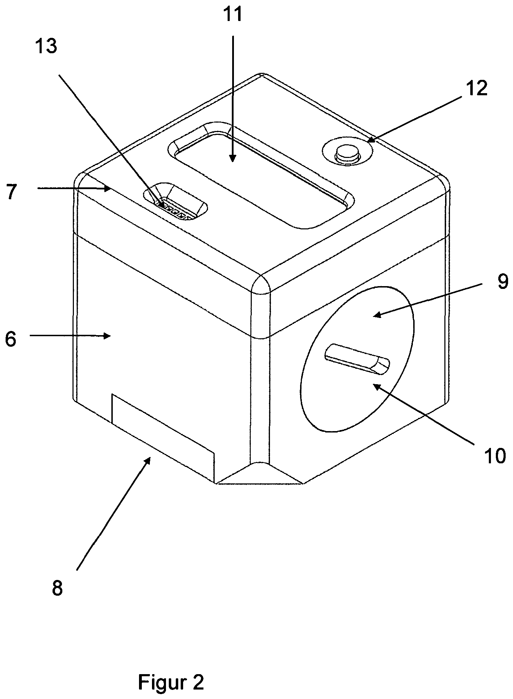

In der **Figur 2** ist die elektro-optische Messvorrichtung in einer perspektivischen Ansicht dargestellt. Die Vorrichtung besteht aus zwei Gehäuseteilen, einem Gehäusegrundkörper (6) und einem Aufsatzteil (7). Der Gehäusegrundkörper weist an seiner Unterseite eine Aussparung (8) auf, deren Form mit der der Testkassette korrespondiert. Die Tiefe der Aussparung entspricht der Höhe der Testkassette. An einer Gehäuseseite befindet sich eine Öffnung als Zugang zum Batteriefach, die mit einem Deckel (9) verschlossen ist. Der Deckel weist eine Nut (10) für ein Werkzeug auf, mit der der Deckel durch Schraubbewegung befestigt bzw. entfernt werden kann.

Im Aufsatzteil (7) befinden sich an deren Oberseite Öffnungen für eine Anzeige (11), einen Drucktaster (12) und einen Stecker (13).

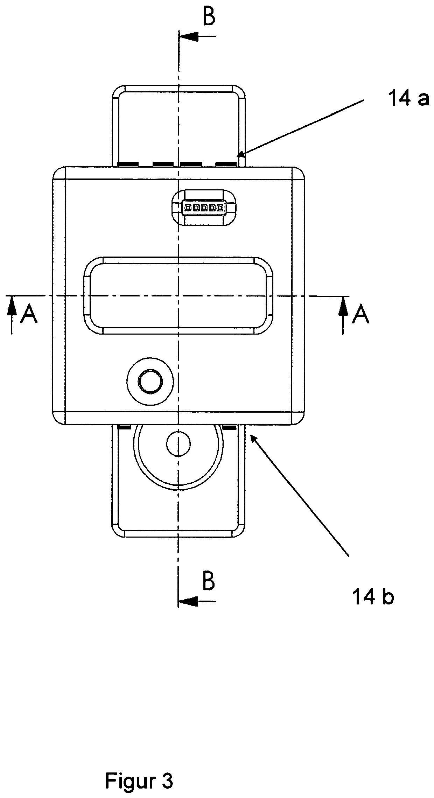

Die **Figur 3** zeigt perspektivisch den Messvorgang. Die Messvorrichtung wird auf die Sichtöffnung (3) der Testkassette aufgesetzt. Dabei wird die Kamera der Messvorrichtung genau über der Sichtöffnung positioniert. Zur richtigen Lage können entweder Markierungen auf der Testkassette (14a und 14b) oder korrespondierende geometrische Strukturen zwischen Testkassette und Messvorrichtung dienen, zum Beispiel Anschläge oder Ausfräsungen an der Testkassette.

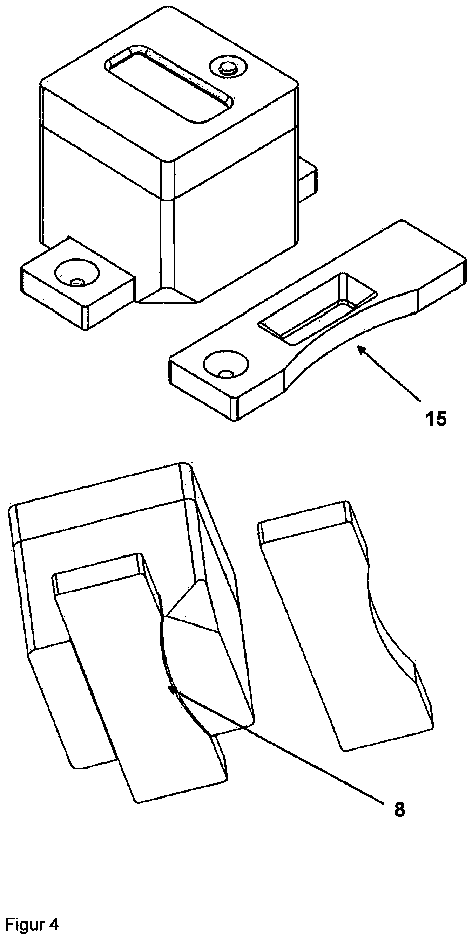

Die **Figur 4** zeigt beispielhaft eine Kassette mit einer Kontur, bei der die Position der Messvorrichtung eindeutig bestimmt wird. Die Testkassette weist einen bogenförmigen Ausschnitt (15) auf. Die Aussparung an der Unterseite (8) ist so geformt, dass die Kassette hier nur in einer eindeutigen Lage eingesetzt werden kann. Durch diese Kontur kann die Messvorrichtung intuitiv aufgesetzt werden, sie ist eindeutig fixiert und kann relativ zum Messfeld nicht verrutschen. Der konkave Ausschnitt kann ebenfalls konvex ausgeformt sein, so dass die Kassette in der Mitte breiter ist und der Aussparung an der Unterseite dem angepasst ist.

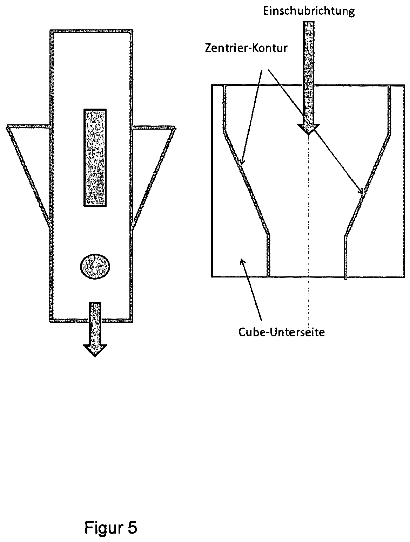

Alternativ kann die Kassette auch, wie in **Figur 5** dargestellt, zwei dreieckige seitliche Flügel haben, die mit einer Zentrier-Kontur an der Unterseite korrespondieren. Bei der Positionierung liegt hier die Messvorrichtung auf einer ebenen Fläche, und die Kassette wird seitlich unter die Messvorrichtung geschoben. Die Flügel dienen hier der Zentrierung und deuten für den Anwender die Richtung an, in die der Test positioniert wird.

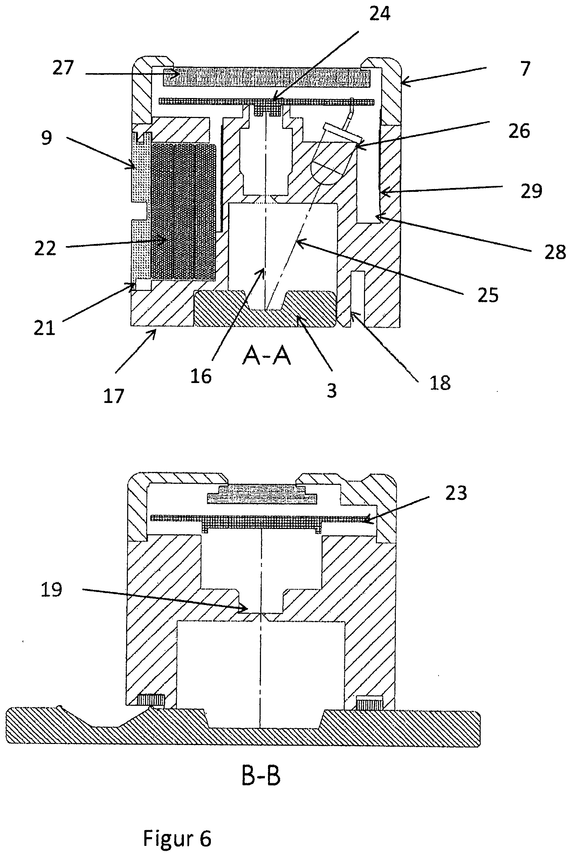

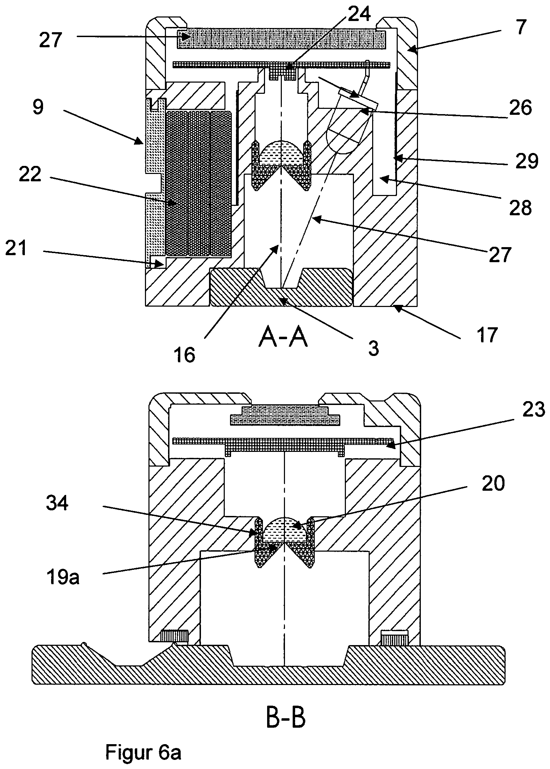

**Figur 6** zeigt zwei zueinander rechtwinklige Schnitte durch die Messvorrichtung. Die Achse der optischen Abbildung (16) verläuft senkrecht zur Unterseite der Ablesehilfe (17). Zentrisch im Körper befindet sich eine Blende mit schlitzförmiger Apertur (19), die beim Herstellungsprozess (vorzugsweise beim Spritzguss) direkt in das Gehäuse eingebracht werden kann, so dass kein zusätzlich zu montierendes Teil notwendig ist. Die Schlitzblende besteht aus einer trichterförmigen Öffnung, die in einer vorteilhaften Ausführung an seiner engsten Stelle eine für die Abbildung optimale Breite und Länge aufweist. Der Winkel des Trichters ist so gewählt, dass kein Licht der Abbildung abgeschattet wird.

Der Grundkörper weist eine Aussparung auf, die als Batteriefach (21) dient. In dieser werden vorzugsweise 3 Lithium-Zellen (22) eingelegt und elektrisch kontaktiert. Das Batteriefach ist mit dem Deckel (9) verschlossen.

Oberhalb der Optik ist ein elektrischer Verdrahtungsträger (23), vorzugsweise eine Leiterplatte montiert, auf dem das Empfangselement (24 ), eine CCD-Empfangszeile (oder Matrix) befestigt ist. Auf dieser Leiterplatte befinden sich außerdem nicht dargestellte Elemente, wie beispielsweise ein Mikrokontroller, die Buchse für das Interfacekabel, die Sende-/Empfangseinheit für die kabel-/berührungslose Datenübertragung und der Taster. Die Leiterplatte dient auch der Ansteuerung der Lichtquelle (26) mit einer angegossenen Linsenkappe.

Diese Beleuchtung ist in Ihrer optischen Achse (25) geneigt und in einer Gehäusekontur im Basisteil befestigt, so dass der Beleuchtungskegel die Sichtöffnung (3) der Kassette (30) optimal ausleuchtet. Die optische Achse der Lichtquelle/LED (26) und deren Neigungswinkel zur optischen Achse (16) sind so gewählt, dass keine Reflexionen aus dem Sichtfenster auf den Empfänger gelangen können.

Die Leiterplatte enthält weiterhin Leiterzüge, deren Layouts vorzugsweise so ausgestaltet sind, dass sie als Sende-/Empfangseinheit für die automatische und berührungslose Test-Identifizierung mit Hilfe elektromagnetischer Wellen (vorzugsweise RFID: Radio-Frequency Identification) geeignet sind. Das Layout der Leiterzüge ist hier nicht dargestellt.

An der Oberseite des Aufsatzteiles (7) ist ein Anzeigedisplay (27) befestigt. Das Display wird über eine elektrische Verbindung, in der Skizze nicht dargestellt, angesteuert.

Weiterhin kann in dem Gehäuse in der Gehäuseaussparung des Grundkörpers (28) ein Signalgeber (29) montiert sein.

Der Abstand zwischen Blende (19) und der zu detektierenden Ebene auf dem Teststreifen im Messfeld der Kassette, der Durchmesser der Blendenöffnung und der Abstand zur Ebene des Empfängerelements sind so dimensioniert, dass die optischen Abbildungsbedingungen erfüllt sind. Insbesondere ist die Blendenapertur bezüglich Lichtstärke, Beugung und Verzeichnung optimiert. In einer vorzugsweisen Ausführung weist die Blende eine Breite von 0,2 mm und eine Länge größer als 0,2 mm, in einer vorteilhaften Ausführung eine Länge von 0,75 mm auf.

Im Bereich der Unterseite der Messvorrichtung (17) befindet sich die Federzunge (18), die so dimensioniert ist, dass sie die Kassette beim Aufsetzen auf die Testkassette (3) an die gegenüberliegende Wand drückt. Dadurch wird erreicht, dass die Testkassette immer gegen einen festen Anschlag drückt. Damit können Einlagetoleranzen in einer Dimension ausgeschlossen werden und die Messreproduzierbarkeit erhöht werden.

**Figur 6a** zeigt alternativ eine Messvorrichtung, in der eine Blende (19a) in einem separaten Blendenkörper (34) angeordnet ist. In einer besonderen Ausführungsform kann an dem Blendenkörper eine zusätzliche Linse (20)angeordnet sein. Diese Ausführungsform ist jedoch nicht Gegenstand der Erfindung.

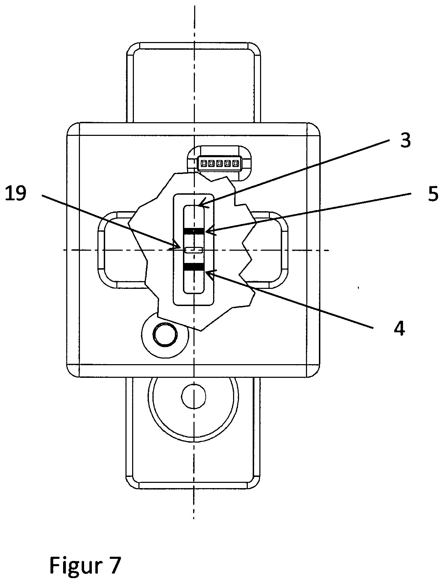

**Figur 7** zeigt die Draufsicht auf die Ablesehilfe mit einem mittigen Ausschnitt durch die Ebene der Blende bis auf die Ebene des Tests. Es ist der Ausschnitt (3)für die Testauswertung mit Kontroll-Linie (5) und Test-Linie (4) zu sehen. Weiterhin ist in einer Parallel-Ebene darüber die Lochblende mit schlitzförmiger Apertur (19) abgebildet. Die schlitzförmige Abbildung verbessert das Auswertesignal auf der CCD nur dann, wenn die längere Seite des Schlitzes möglichst parallel zu Test- und Kontroll-Linie verläuft. Die Winkelabweichung sollte nicht mehr als 5° betragen.

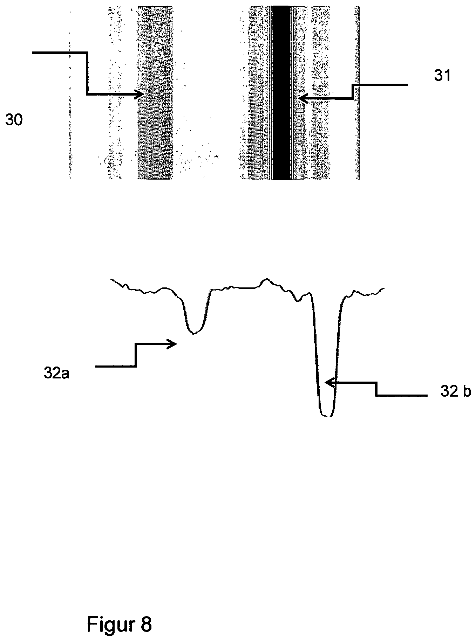

**Figur 8** zeigt einen Scan, der mit einer solchen erfindungsgemäßen Anordnung aufgenommen wurde: Die Erprobung hat ergeben, dass die Abbildung mit dem erfindungsgemäßen Aufbau zur Erzielung von gut auswertbarer Ergebnissen führt. Der Scan wurde ähnlich dem Prinzip der "Camera Obscura" d. h. mit einer Blende als abbildendes Element gewonnen. **Figur 9** zeigt weiterhin, dass nach dem gleichen Prinzip auch Barcodes ausgewertet werden können.

Der Messablauf erfolgt wie folgt:
Der Anwender positioniert in der oben beschriebenen Verfahrensweise die Messvorrichtung so über der Testkassette, dass sich die optische Abbildungsachse zentrisch über dem Sichtfenster der Kassette befindet. Er löst den Taster aus und startet damit den Messvorgang, gesteuert durch den Mikrokontroller. Zunächst wird impulsartig die Beleuchtung/LED bestromt, sie beleuchtet das Testfeld mit den zu messenden Test- und Kontrolllinien. Das diffus reflektierte Licht gelangt durch die Blende auf die CCD mit einzelnen fotoempfindlichen Elementen. Die Bildinformation wird vom Mikrokontroller ausgelesen, verarbeitet und zur Anzeige gebracht. Dazu werden die gemessenen Werte mit im Mikrokontroller hinterlegten Werten verglichen und ausgegeben. Ggf. wird das Ende des Messergebnisses mit einem akustischen Signal angezeigt. Die Messwerte werden in einem Speicher hinterlegt. Mit einem speziellen Datenkabel können die Werte ausgelesen und an einen externen Rechner übertragen werden.

Um die Testdynamik, das heißt den Test während der Entwicklung, beobachten zu können, kann der Messvorgang in einer beliebigen Frequenz wiederholt werden. Durch Mehrfachmessungen können außerdem Messfehler verringert bzw. ausgeschlossen werden.

**Figur 8** zeigt ein Profil, das mit einer solchen optischen Abbildung ohne Linse aufgenommen wurde. Deutlich ist das Signal von der Testlinie (30) und der Kontrolllinie (31). In dem Diagramm sind die von der CCD ausgelesenen Graustufenwerte als Diagramm dargestellt, die Peakhöhe (32a) zeigt die Graustufe der Testlinie (30) und die Peakhöhe (32b) die Graustufe der Kontrolllinie (31). Die Graustufe der Testlinie kann mit einem kalibrierten und im Gerät hinterlegten Wert verglichen und zur Anzeige gebracht werden. Diese Werte können von der Auswertelogik entweder mit im Speicher hinterlegten absoluten Werten oder mit vorab gemessenen Vergleichswerten verglichen werden. Möglich ist auch, dass das Ergebnis aus dem Verhältnis der Graustufen von beiden Linien zueinander berechnet wird. Die Konfiguration kann direkt vor der Messung (vorzugsweise mittels RFID) geladen werden.

**In** **Figur 9** sind das Bild und der Grauwertscan für einen Barcode dargestellt. Es ist überraschend zu sehen, dass mit der Messvorrichtung und deren Kamera Maxima und Minima deutlich zu erkennen sind. Mit der erfindungsgemäßen Messvorrichtung können folglich Barcodes erkannt werden. Das bietet sich beispielsweise dann an, wenn der Test auf der Rückseite zur Identifikation einen Barcode aufweist. Außerdem können durch den Barcode Kalibrierungsdaten für die Tests verschlüsselt werden.

**Figur 10** zeigt den schematischen Aufbau eines LFA's.

**Figur 11** zeigt eine Testkassette in der Ausführungsform, bei der sie mit einem Transponder bestückt ist. In Figur 11a ist der Transponder auf der Rückseite aufgebracht, in Figur 11b ist der Transponder zwischen Ober- und Unterschale der Kassette integriert. Der Transponder enthält die testspezifischen Kalibrier- bzw. Konfigurationsdaten, die nach dem Start des Gerätes von der Geräteelektronik abgefragt und drahtlos übertragen werden.

Nach erfolgter Messung können die gewonnenen Daten/Ergebnisse im Transponder gespeichert werden. Diese Testart wird hier weiterhin "Smart-Test" genannt.

Ein "Smart-Test" ist ein Schnelltest, in dem die erforderlichen Daten für die Testevaluierung eingebracht sind und für die Evaluierung abgerufen werden können, vorzugsweise (hier) mittels eines RFID-Chips/RFID-Tag's. Mit Hilfe dieser Anordnung wird vermieden, dass durch den Anwender zu dem zu messenden Test falsche Daten in das Lesegerät, gelangen können.

Es ist denkbar, nach der Auswertung die erlangten Daten/Ergebnisse in dem RFID-Tag zu hinterlegen. Dadurch ist es möglich, die Daten beispielsweise für den behandelnden Arzt oder den Betreuer des Anwenders für eine spätere Nutzung und Dokumentation zur Verfügung zu stellen. Dem Anwender wird es somit ermöglicht, einen Test selbstständig durchzuführen und die ermittelten unverfälschten Daten für spätere Nutzung zur archivieren.

Um die Daten weiter nutzen zu können, ist lediglich ein Lesegerät, dass RFID-Tag's auswerten kann, notwendig (beispielsweise Ein "Smartphone" mit entsprechender Software (App)).

### Legende der Figuren:

**Figur 1**: ist eine Testkassette
**Figur 2**: Messvorrichtung in perspektivischer Ansicht
**Figur 3**: Messvorgang mit Messvorrichtung und Draufsicht mit Testkassette
**Figur 4**: Kassette und Ausschnitt mit bogenförmigem Ausschnitt
**Figur 5**: Kassette und Ausschnitt mit dreieckiger Führungskontur
**Figur 6** **und** **6a**: Schnitt durch die Messvorrichtung
**Figur 7**: Ausschnitt aus der Messvorrichtung in der Draufsicht
**Figur 8**: Aufnahme eines Teststreifens
**Figur 9**: Bild und Grauwertscan für einen Barcode.

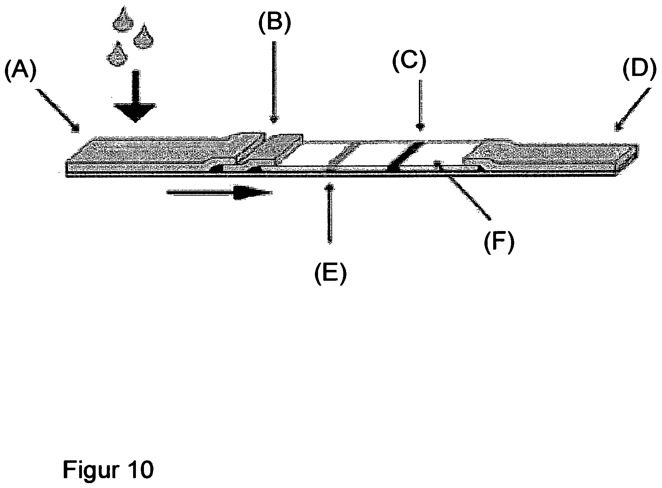

**Figur 10**: Schematischer Aufbau eines LFA

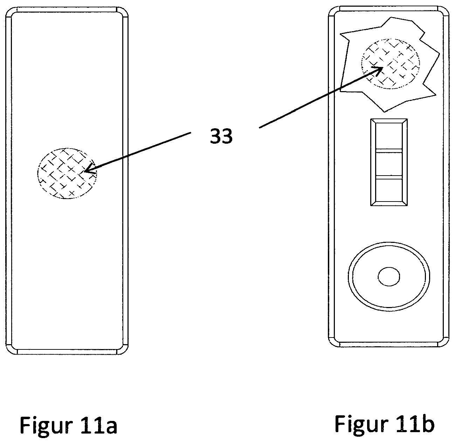

**Figur 11a** **und b**: Testkassette mit Transponder

### Bezugszeichenliste:

1 Testkassette
2 Öffnung für Einbringung der Testprobe
3 Sichtöffnung für Testauswertung
4 Testlinie ("Capture line")
5 Kontrolllinie
6 Gehäusegrundkörper
7 Aufsatzteil
8 Aussparung auf Unterseite des Gehäusegrundkörpers
9 Deckel für Batteriefach
10 Nut zur Öffnung des Batteriefaches
11 Anzeige
12 Bedienelement (Drucktaster)
13 Mini-USB-Stecker
14a und 14b Markierungen auf der Testkassette
15 bogenförmiger, halbmondförmiger Ausschnitt
16 Achse der optischen Abbildung
17 Unterseite der Messvorrichtung
18 Federzunge
19 Lochblende mit schlitzförmiger Apertur (Schlitzblende)
19a Lochblende im Blendenkörper
20 Linse
21 Batteriefach
22 3 Lithium-Dioden-Zellen
23 elektrischer Verdrahtungsträger vorzugsweise Leiterplatte
24 Empfangselement, CCD-Empfangszeile
25 optische Achse für Beleuchtung
26 LED
27 Anzeigedisplay
28 Gehäuseaussparung des Grundkörpers
29 Signalgeber
30 Signal von der Testlinie
31 Signal von der Kontrolllinie
32a Peakhöhe, Grauwert Testlinie
32b Peakhöhe, Grauwert Kontrolllinie
A Sample-Pad
B Antikörper-Pad
C Kontroll-Linie
D Saug-Pad
E Test-Linie
F Nitrozellulose-Membran
33 Transponder
34 Blendenkörper

## Patentansprüche

1. Vorrichtung zur digitalen Auswertung eines Teststreifens mit Kontrolllinie (5) und Testlinie (4), bestehend aus einem Gehäusegrundkörper (6) und einem Aufsatzteil (7) enthaltend eine Lichtquelle (26), optische Komponenten für die Abbildung, eine CCD-Zeile als Empfangselement (24), eine elektronische Schaltung, eine Anzeigekomponente (11), eine elektrische Schnittstelle zur Datenübertragung, ein kabel-/berührungsloses Datenübertragungssystem, eine Aufnahmeeinrichtung für den Teststreifen, eine Stromversorgung und ein Bedienelement (12), **dadurch gekennzeichnet, dass**
- die optische Komponente eine Schlitzblende (19) ohne Vorhandensein von zusätzlichen optischen Komponenten ist, die so angeordnet ist, dass der Schlitz der Schlitzblende (19) parallel zur Kontrolllinie (5) und Testlinie (4) verläuft und wobei die Schlitzblende (19) im Gehäusegrundkörper (6) integriert ist, indem sie beim Herstellungsprozess in den Gehäusegrundkörper (6) eingeprägt ist,
- die elektronische Schaltung eine Leiterplatte (23) ist, die eine Sende-/Empfangseinheit für das kontaktlose Laden und Speichern von Testinformationen mittels elektromagnetischer Wellen, die CCD-Zeile (24) und einen Mikrokontroller aufweist, und der Grundkörper (6) eine Anschlagfläche aufweist, auf der die Leiterplatte (23) montiert ist.

2. Vorrichtung nach Anspruch 1, **dadurch gekennzeichnet, dass** der Schlitz (19) vorzugsweise eine Breite von 0,1 bis 0,5 mm aufweist und die Schlitzlänge um den Faktor 4 länger ist.

3. Vorrichtung nach Anspruch 1, **dadurch gekennzeichnet, dass** auf der Leiterplatte (23) eine elektronische Schaltung und eine Antenne integriert sind, die automatisch und berührungslos die testspezifischen Daten von einem Transponder (33) auf dem Teststreifen bzw. der Verpackung mittels elektromagnetischer Wellen einlesen können.

4. Vorrichtung nach Anspruch 1, **dadurch gekennzeichnet, dass** das Lesegerät die Testergebnisse mit Hilfe der kontaktlosen Datenübertragung in einem "Smart-Test" speichert.

5. Vorrichtung nach Anspruch 1, **dadurch gekennzeichnet, dass** die Lichtquelle (26) zwei im Gehäusegrundkörper (6) integrierte LEDs (26) sind.

6. Vorrichtung nach Anspruch 1, **dadurch gekennzeichnet, dass** die Wellenlänge der Lichtquelle (26) an den Test anpassbar ist.

7. Vorrichtung nach Anspruch 1, **dadurch gekennzeichnet, dass** sich ein Batteriefach (21) für die Stromversorgung im Gehäusegrundkörper (6) befindet.

8. Vorrichtung nach Anspruch 1, **dadurch gekennzeichnet, dass** die innerhalb des Gehäusegrundkörpers (6) liegenden Flächen so gestaltet sind, dass sie optisch inaktiv sind.

9. Vorrichtung nach Anspruch 5, **dadurch gekennzeichnet, dass** die innerhalb des Gehäusegrundkörpers (6) liegenden Flächen mattiert sind.

10. Vorrichtung nach Anspruch 5, **dadurch gekennzeichnet, dass** die Lichtquelle (26) derart angeordnet ist, dass eine seitliche Beleuchtung erfolgt und diese seitliche Beleuchtung in einem solchen Winkel erfolgt, dass es keine störenden Reflexionen gibt.

11. Vorrichtung nach Anspruch 1, **dadurch gekennzeichnet, dass** der Gehäusegrundkörper (6) über eine Positionierhilfe zum Schutz des Teststreifens vor Verschiebungen oder Verdrehungen verfügt.

12. Vorrichtung nach Anspruch 1, **dadurch gekennzeichnet, dass** der Gehäusegrundkörper (6) eine Federzunge (18) aufweist, die den Teststreifen an einen festen Gehäuseanschlag drückt.

## Claims

1. Apparatus for digitally evaluating a test strip having a control line (5) and a test line (4), consisting of a housing main body (6) and an attachment part (7) containing a light source (26), optical components for imaging, a CCD line as receiver element (24), an electronic circuit, a display component (11), an electrical interface for data transfer, a wireless/contactless data transfer system, a receiving unit for the test strip, a power supply and an operating element (12), **characterized in that**
- the optical component is a slit aperture (19) without the presence of additional optical components, the said slit aperture being arranged so that the slit of the slit aperture (19) runs in parallel with the control line (5) and the test line (4), with the slit aperture (19) being integrated in the housing main body (6) by virtue of being impressed into the housing main body (6) during the production process,
- the electronic circuit is a printed circuit board (23) comprising a transceiver unit for contactless loading and storing of test information by means of electromagnetic waves, the CCD line (24) and a microcontroller, and the main body (6) has an abutment surface on which the printed circuit board (23) is assembled.

2. Apparatus according to Claim 1, **characterized in that** the slit (19) preferably has a width between 0.1 and 0.5 mm and the slit length is longer by a factor of 4.

3. Apparatus according to Claim 1, **characterized in that** an electronic circuit and an antenna are integrated into the printed circuit board (23), the said electronic circuit and antenna being able to automatically and contactlessly read the test-specific data from a transponder (33) on the test strip or the packaging by means of electromagnetic waves.

4. Apparatus according to Claim 1, **characterized in that** the reader stores the test results in a "smart test" with the aid of contactless data transfer.

5. Apparatus according to Claim 1, **characterized in that** the light source (26) is two LEDs (26) which are integrated in the housing main body (6).

6. Apparatus according to Claim 1, **characterized in that** the wavelength of the light source (26) is adaptable to match the test.

7. Apparatus according to Claim 1, **characterized in that** there is a battery compartment (21) for the power supply in the housing main body (6).

8. Apparatus according to Claim 1, **characterized in that** the surfaces located within the housing main body (6) are designed so that they are optically inactive.

9. Apparatus according to Claim 5, **characterized in that** the surfaces located within the housing main body (6) are matted.

10. Apparatus according to Claim 5, **characterized in that** the light source (26) is arranged so that there is lateral illumination, and this lateral illumination is at such an angle that there are no bothersome reflections.

11. Apparatus according to Claim 1, **characterized in that** the housing main body (6) comprises a positioning aid for protecting the test strip from displacements or rotations.

12. Apparatus according to Claim 1, **characterized in that** the housing main body (6) has a spring tongue (18), which presses the test strip against a secure housing stop.

## Revendications

1. Dispositif d'évaluation numérique d'une bandelette de test pourvue d'une bande de contrôle (5) et d'une bande test (4), composé d'un corps de base de boîtier (6) et d'une partie supérieure (7) comportant une source de lumière (26), des composants optiques pour la représentation, une barrette CCD comme élément de réception (24), un circuit électronique, un composant d'affichage (11), une interface électrique pour la transmission de données, un système de transmission de données sans câble/contact, un dispositif de logement pour la bandelette de test, une alimentation électrique et un élément de commande (12),
**caractérisé en ce que**
- le composant optique est un diaphragme à fente (19) sans la présence de composants optiques supplémentaires, qui est disposé de telle sorte que la fente du diaphragme à fente (19) s'étend en parallèle à la bande de contrôle (5) et à la bande test (4), et dans lequel le diaphragme à fente (19) est intégré dans le corps de base de boîtier (6) en étant incrusté dans le corps de base de boîtier (6) lors du processus de fabrication,
- le circuit électronique est une carte de circuits imprimés (23) qui présente une unité d'émission/réception pour le chargement et le stockage sans contact d'informations de test au moyen d'ondes électromagnétiques, la barrette CCD (24) et un microcontrôleur, et le corps de base (6) présente une surface de butée sur laquelle est montée la carte de circuits imprimés (23).

2. Dispositif selon la revendication 1, **caractérisé en ce que** la fente (19) présente de préférence une largeur de 0,1 à 0,5 mm, et la longueur de fente est plus grande d'un facteur 4.

3. Dispositif selon la revendication 1, **caractérisé en ce que** sur la carte de circuits imprimés (23) sont intégrés un circuit électronique et une antenne qui peuvent lire automatiquement et sans contact les données spécifiques au test à partir d'un transpondeur (33) sur la bandelette de test ou l'emballage au moyen d'ondes électromagnétiques.

4. Dispositif selon la revendication 1, **caractérisé en ce que** le lecteur stocke les résultats de test à l'aide de la transmission de données sans contact dans un « test intelligent ».

5. Dispositif selon la revendication 1, **caractérisé en ce que** la source de lumière (26) correspond à deux LED (26) intégrées dans le corps de base de boîtier (6) .

6. Dispositif selon la revendication 1, **caractérisé en ce que** la longueur d'onde de la source de lumière (26) peut être adaptée au test.

7. Dispositif selon la revendication 1, **caractérisé en ce qu'**un compartiment à piles (21) pour l'alimentation électrique se trouve dans le corps de base de boîtier (6).

8. Dispositif selon la revendication 1, **caractérisé en ce que** les surfaces situées à l'intérieur du corps de base de boîtier (6) sont configurées de telle sorte qu'elles sont optiquement inactives.

9. Dispositif selon la revendication 5, **caractérisé en ce que** les surfaces situées à l'intérieur du corps de base de boîtier (6) sont mates.

10. Dispositif selon la revendication 5, **caractérisé en ce que** la source de lumière (26) est disposée de telle sorte qu'un éclairage latéral a lieu, et cet éclairage latéral a lieu dans un angle tel qu'il n'y a pas de réflexions gênantes.

11. Dispositif selon la revendication 1, **caractérisé en ce que** le corps de base de boîtier (6) dispose d'une aide au positionnement pour protéger la bandelette test contre les glissements et les rotations.

12. Dispositif selon la revendication 1, **caractérisé en ce que** le corps de base de boîtier (6) présente une lame de ressort (18) qui pousse la bandelette test contre une butée de boîtier fixe.
